# EUROPEAN PATENT APPLICATION

(11) **EP 2 071 506 A1**
(43) Date of publication of application: **17.06.2009**
(21) Application number: 08170937.0
(22) Date of filing: 08.12.2008
(51) Int. Cl.: G06Q 30/00, G06Q 50/00

(54) **Method and system for providing a personalized entertainment service to a guest at a lodging facility**

(30) Priority: 11.12.2007 NO 20076342
(71) Applicant: Otrum Asa, Sentrum N-0104 Oslo (NO)
(72) Inventor: Raunela, Samu, N-0198, OSLO (NO); Bateson, Nigel, N-1177, OSLO (NO); Byberg, Pål, N-1412, SOFIEMYR (NO)
(74) Representative: Onsagers Ltd

(57) **Abstract**

A method, a system and a computer program product for providing a personalized entertainment service to a guest at a lodging facility. Demographic data associated with at least one room in a lodging facility are received from a property management system. Based on the received demographic data, a profile of options is selected among a plurality of preconfigured options based at least partly on said demographic data. The selected profile of options is used as settings in an entertainment system in order to provide entertainment in a room for which associated demographic data has been received. In this manner entertainment may be presented in a way that is adapted to a guests nationality, native language etc. Personal profiles for certain guests may be used to override the profiles selected based on demographics.

## Description

### FIELD OF THE INVENTION

The present invention relates to an in room entertainment systems for lodging facilities, and in particular to a system of personalizing an in room entertainment system based on demographic data.

### BACKGROUND OF THE INVENTION

When guests at a lodging facility such as a hotel enters their hotel room they are typically greeted with a message on the screen of the in room television set. This message may be part of the interactive entertainment system which allows a guest the possibility of navigating through a number of menus, select television and radio programming, order pay per view movies, and do some basic interaction with the hotel's property management system, such as ordering a wake up call or checking out.

In some cases the guest will be able to select a different language for this menu system than the default language provided by the hotel, but in most cases the selection of languages is limited to one or a few widely international languages, and perhaps a local language.

It would be preferable to guests if their preferred languages were automatically selected when they checked in at a hotel, and perhaps even that the selection of language not only included the language of the menu system, but also had some impact on the options available to them or pre-selected for them on the entertainment system. For instance, a German guest may be interested in watching a movie with German audio track subtitles, access German news.

This invention is related to the same inventors' co-pending application entitled METHOD, SYSTEM AND COMPUTER PROGRAM PRODUCT FOR DISTRIBUTING TARGETED MESSAGES TO A ROOM IN A LODGING FACILITY which is hereby incorporated in its entirety by reference.

### SUMMARY OF THE INVENTION

The invention relates to in room entertainment systems for lodging facilities and to methods related to such systems. In particular the invention relates to a system and a method of personalizing an in room entertainment system based on demographic data. By accessing information received from a property management system, an entertainment system is configured to select among configuration options based on demographic data associated with a room. The demographic data may be representative of a guest registered as staying in said room, and may include such information as the guests nationality or preferred language.

The configuration options available to be selected based on said received demographic data may include at least one of a selected language for a menu to be displayed at the screen of an in room television, a preferred language to be used for television programming subtitles or captioning, a preferred audio language, a selection of television channels available on an in room television, and a preferred sequence of presentation of television channels available on an in room television.

According to some embodiments of the invention, the received demographic data include a unique profile identifier which may be stored in a database. The database may, according to embodiments of the invention, be locally or remotely located. If such a unique profile identifier is provided, the database may be accessed and a profile identified by said profile identifier may be retrieved. The selection among preconfigured options may then be, at least partly, based on said retrieved profile.

Consistent with some aspects of this embodiment, the system may be configured to receive interactive feedback from a set top box connected to the in room television, and to update the retrieved profile with said received interactive feedback. In this manner a guest may make changes to the way options are selected the next time he or she checks in at a hotel.

According to some embodiments, the preconfigured options are transmitted to an entertainment system as settings to be implemented by said entertainment system.

The various aspects of the invention include a method, a computer system and computer program products embodied on a computer readable storage medium.

These and other aspects of the present invention will be more fully understood in light of the following detailed description and the accompanying figures which illustrate by way of example principles of the invention.

### BRIEF DESCRIPTION OF THE DRAWINGS

FIG. 1 is a diagram showing a system operating in accordance with the invention;
FIG. 2 is a flow chart illustrating a process in accordance with the invention;
FIG. 3 is a flow chart illustrating a process wherein a guest interacts with an entertainment server;
FIG. 4 is a flow chart illustrating a process wherein a guest interacts with a preference server to select an alternative predefined profile;
FIG. 5 is a flow chart illustrating a process wherein a guest interacts with a preference server to modify a selected predefined profile; and
FIG. 6 is a flow chart illustrating a process wherein unique guest profiles may override predefined profiles and be updated and stored for future use.

### DESCRIPTION OF EXEMPLARY EMBODIMENTS

The following is a description of exemplary embodiments of the invention, according to which a system is configured to provide a guest with access to an entertainment system in his or her hotel room with one or more configuration options selected based on demographic data about the guest, such as e.g. nationality or preferred language. It will be understood by those skilled in the art that the exemplary embodiments are intended to provide a better understanding of the invention and that they should not be interpreted as limitations to the invention, the scope of which is defined by the appended claims.

The demographic information may be accessed from the hotel's property management system (PMS). It will be understood by those skilled in the art that the exemplary embodiments are intended to provide a better understanding of the invention and that they should not be interpreted as limitations to the invention, the scope of which is defined by the appended claims.

It will also be understood that the term demographic information is intended to cover any information that is useful in characterizing a person or associating a person with a particular group where some people belong and other people do not belong. Examples of demographic identifiers include age, gender, nationality, native language, religion and income level, and also strictly commercial identifiers such as membership of a loyalty program, holder of a particular credit card, and any information about preferences a person or persons may have voluntarily registered about themselves. The invention is not limited to any particular type of demographic identifier, and any, all or none of the examples mentioned above may be relevant to any particular embodiment of the invention.

The term Property Management System (PMS) is intended to cover any server or computer system, or combination of servers or computer systems, capable of delivering demographic information about guests or customers of a lodging facility together with an identification of a room and/or a television set associated with the guest. For instance, while identification of a guest and of a room may be received from one server, additional demographic data could be received from an additional server, e.g. a customer database associated with a loyalty program, based on the information received from the first server.

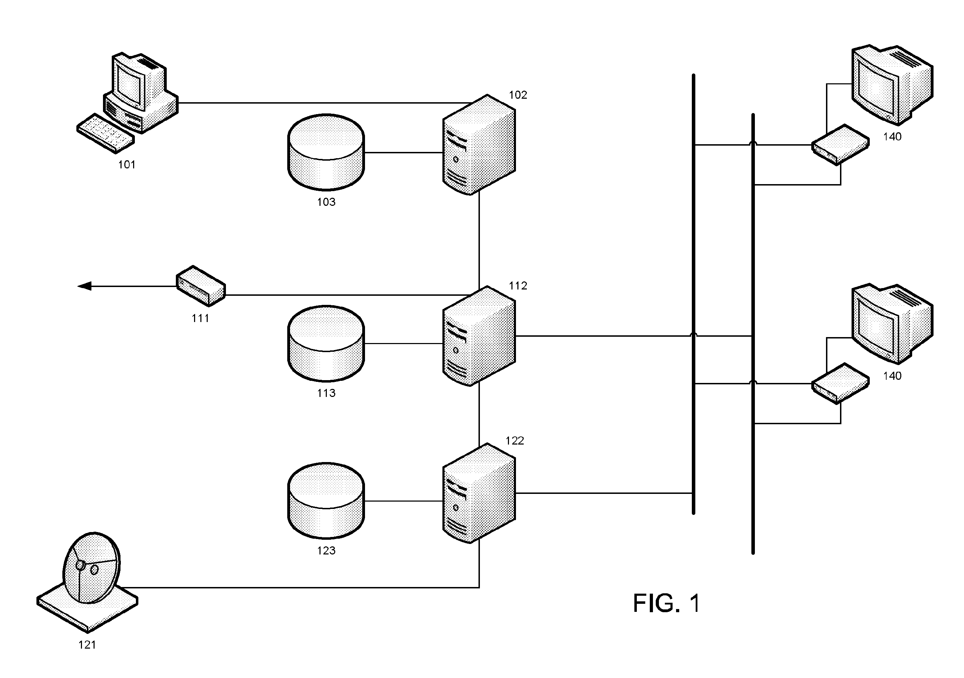

FIG. 1 shows a diagram of an exemplary embodiment of the invention in the form of a system installed and operating at a lodging facility such as a hotel.

At a front desk, in a reception area or in an office of a lodging facility such as a hotel, a computer 101 may be located. For the purposes of this exemplary embodiment it will be assumed that the lodging facility is a hotel, but the invention is not so limited in this respect. The computer 101 may be connected to the internet or some other communication network (not shown). According to some embodiments, however, the computer 101 may primarily be configured to communicate with a local property management system (PMS) 102. When a guest arrives at the hotel, he or she may be registered in the PMS 102 by way of the computer 101. If the guest has a reservation, some information may already be present in the PMS, other information may be added during check in or registration of the guest. An example of information that may be registered during the check in procedure includes name, home address, nationality, age, gender, assigned room number, payment method, whether the guest is member of a loyalty program, etc.

The information entered into the PMS may be stored in a PMS database 103.

A local preference server 112 operating in accordance with the principles of the present invention may also be provided. The local preference server may be connected to or include a local database 113. The preference server 112 may also be connected to or include a replicator 111, which will be described in further detail below. The local preference server 112 may be configured to receive preference profiles associated with a particular room, as will be further described below. The local preference server 112 may also be configured to request or receive guest profile information from the PMS server 102. The preference profile may be described as a technical profile representing settings of technical equipment available to the guest during his or her stay at the hotel.

According to the exemplary embodiment shown in FIG. 1, an entertainment server 122 is also provided. In embodiments consistent with the principles of the invention, the entertainment server 122 may be connected to a delivery system for entertainment programming, in FIG. 1 illustrated as a satellite dish 121. The entertainment server 122 may also be connected to or include an entertainment database 123. The entertainment delivery system may, by way of example, include one or more of a television cable network, a satellite receiver, Internet download capabilities, radio and television reception equipment etc. The entertainment database 123 may include equipment for storing and accessing entertainment programming such as pay per view video, video games, music etc. Programming stored in the database 123 may be received from the entertainment delivery system 121, or it may be loaded into the database locally and/or manually. Programming may be stored on hard drives, optical discs or any other storage media that is found convenient during system design, as is known by those with skill in the art.

The local preference server 112, the PMS server 102 and the entertainment server 122 may be connected to each other such that they are able to retrieve information from each other or transmit information to each other. Such communication may e.g. be transmitted over a local area network. Consistent with the principles of the invention, the preference server 112 and the entertainment server 122 may be implemented as modules running on the same server and communicating with each other using internal system resources of that server. The principles of operation will, however, be the same, and in the exemplary embodiment described below, it is assumed that the preference server 112 and the entertainment server 122 are installed on separate computers.

The system at the hotel may further include television sets 140 in a number of guest rooms. A television set 140 may be connected to a set top box 141 corresponding with the set top box 141 shown in FIG. 1.

According to the example illustrated in FIG. 1, entertainment programming may be transmitted over a local entertainment network 180. According to some embodiments, this network may be a cable TV network transmitting analog radio and television programming. According to other embodiments the entertainment programming may be transmitted as digital information, Examples of digital formats that may be used for transmission of audio and video include MPEG-2 and other MPEG standards, and other open and proprietary standards that are well known to those with skill in the art. Programming may be broadcast over the local entertainment network 180 such that they may be received by any of the in room television sets 140, directly or over a set top box 141. Programming may also be addressed to a particular television set 140 or set top box 141 in response to a request received from that television set 140 or set top box 141. Requests from the set top box 141 may be transmitted to the entertainment server 122 over the entertainment network 180 or over a separate network, as described in further detail below. Requests may include requests for particular programming, or other commands or settings relating to the entertainment server.

According to some embodiments, the local entertainment network 180 may include coaxial cables (e.g. 75 ohm coaxial cable), but other alternatives include twisted pair, wireless and fiber optics.

The example in FIG. 1 also includes a second network which may be configured to operate as a local messaging network 181. The local messaging network 181 may be connected to the local preference server 112 and configured to distribute messages and requests/commands between the preference server 112 and the various in room television sets 140. According to some embodiments, the set top boxes 141 may be configured to transmit information to the preference server 112.

According to some embodiments of the invention, the transmission of information between the preference server 112 and the set top box 141 may be performed using well known communications protocols such as TCP/IP or other well known communications protocols.

According to some embodiments the messaging network 181 may include an Ethernet network on twisted pair, wireless, fiber optics or over a coaxial network.

It will be understood by those with skill in the art that physically, the entertainment network 180 and the message network 181 may be one and the same network (i.e. entertainment, messages and commands may be transmitted over the same medium). The two networks may also be one and the same logically speaking, in the sense that they use the same communication protocols. By way of example, entertainment and messages or commands may both be transmitted over a twisted pair network using the internet protocol (IP). Messages may be transmitted using a messaging format which includes or embeds text, audio (e.g. MP3), graphics (e.g. JPG or GIF) and video (e.g. MPEG) over TCP, while entertainment is streamed over the same network using video or audio (e.g. MPEG) over UDP. As those with skill in the art will realize, numerous other alternatives are consistent with the principles of the invention.

The PMS server 102 may also, in accordance with certain aspects of the invention, be configured to communicate with set top boxes in the rooms, e.g. in order to provide guests with the opportunity to check out from their room using their television sets, or to charge pay per view movies directly to the room. It will be understood by those with skill in the art that such communication may be transmitted over one of the local networks 180,181 directly, using the methods described above. Alternatively, the entertainment system may operate as a front end for the PMS with respect to communication with the rooms.

Programming and information available from the entertainment server 122 may be available in several versions. By way of example, a pay per view movie may be available in different languages both with respect to audio and to subtitles or captioning. Other examples of different options that may be available from the entertainment system may include menu languages, the sequence in which available television channels are listed, a short list of favorite television channels, as well as similar options of radio and music selections.

According to certain aspects of the present invention, a number of preconfigured options, each representing a set of selections or preferences for the entertainment system, may be stored in the local preference database 113. Each such set of selections may be referred to as a preference profile. The predefined preference profiles may be associated with a category that may be selected based on demographic data. According to one embodiment of the invention, predefined preference profiles are associated with languages. According to a second embodiment, predefined preference profiles are associated with nationalities or country of residence. According to a third embodiment, predefined preference profiles are associated with several identifiers, and regular expressions are used to select a profile. Consistent with principles of the invention, the rules for selecting a predefined preference profile may also include e.g. whether a room is occupied by only one person, a couple or a family.

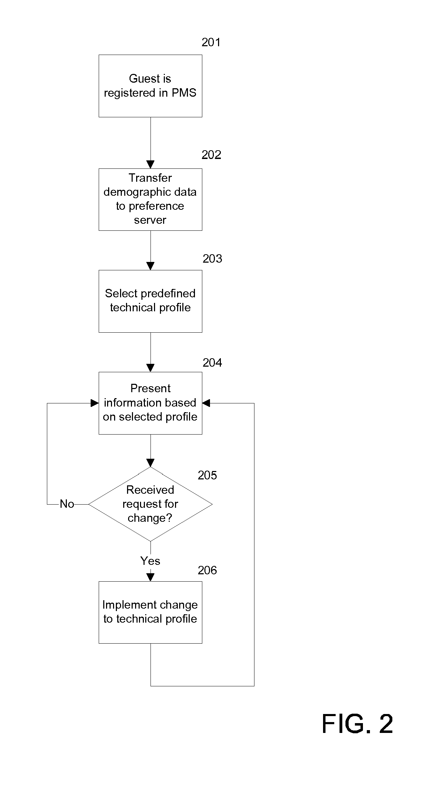

Reference is now made to FIG. 2 which shows in a flow chart the process of selection and implementation of a predefined profile of entertainment system settings consistent with the principles of the invention.

In a first step 201, a guest checks in to a hotel and is assigned a room. Demographic data relating to the guest may be registered in the PMS. In the registration process, the computer 101 may be used to enter the information, which may then be transferred to the PMS server 102 to be stored in the PMS database 103.

In a next step 202, demographic data about that guest may be transferred from the hotel PMS 102 to the preference server 112. Exactly what type of demographic data that may be made available to the preference server 112 may depend on categorization of predefined preference profiles in the preference database 113. Use of demographic data may also be limited by privacy legislation, which must be taken into consideration during the design of a system.

Based on the demographic data received from the PMS 102, the preference server may select a predefined preference profile from the preference database 113 in a next step 203. This predefined preference profile may be applied such that entertainment and information provided from the entertainment server 122 to a television set 140 in the room of the guest is presented, in step 204, in accordance with the settings that are included in the predefined profile selected.

In some embodiments of the invention, the predefined preference profile selected may be transmitted to a set top box 141 in a room assigned to the guest for whom the preference profile has been selected. The set top box 141 may then transmit the settings to the entertainment server 122 as if they were settings selected by a guest e.g. through interaction with the entertainment system with a remote control (not shown). Alternatively, the preference server 112 may transfer the selected profile of settings directly to the entertainment server 122 without involving the set top box 141.

After the selected profile has been implemented, the system may wait for instructions from the set top box 141 representing requests or commands from the guest. As long as no such requests relating to the selected profile are received in a step 205, the system will continue to present information and entertainment in accordance with the selected profile.

If a guest is unhappy with the selection of predefined technical profile made based on demographic data, he or she may interact with the system using a remote control to bring up a menu on the screen of the in room television 140 and make selections from the menu with the remote control. The set top box 141 may receive signals from the remote control representing the guest's choices, and information representing these choices may be transmitted from the set top box 141 to either the preference server 112 or the entertainment server 122, e.g. over the messaging network 181.

According to some embodiments, the guest may not interact with the preference server 112, Any changes made by the guest may then be transmitted to the entertainment server 122 in order to implement the desired changes to the settings initially made through the selection of the predefined preference profile. According to other embodiments, the preference server 112 may receive requests or commands from the set top box in the guest's room representing changes the guest wants implemented.

After a request for change of settings has been received in a step 205, the system may proceed to implement the changes to the technical profile of settings that was initially selected based on demographic information about the guest. This change may be implemented in a step 206, following which the system may return to step 204 and display information and entertainment in accordance with the profile as updated by the guest.

Consistent with the principles of the invention, the guest's interaction with the system may be implemented in accordance with several alternative embodiments.

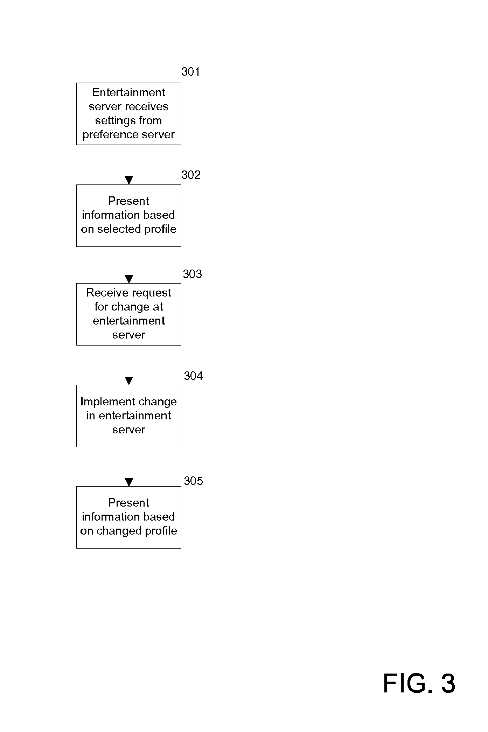

According to a first embodiment, illustrated in FIG. 3, the implementation of the predefined settings represents an initialization of the entertainment server with respect to one room based on a demographic profile of the guest staying in that room. The entertainment system is initialized in a step 301 when the entertainment server 122 receives the settings included in the selected predefined technical profile. As described above the settings may be received directly from the preference server 112 or indirectly from a set top box 141. Any further interaction between the guest and the system with respect to the settings included in the predefined preference profile happens between the guest and the entertainment server 122. The entertainment server presents information and entertainment to the guest using the received preference profile in a step 302. Any request for change to this profile is received by the entertainment server 122 from the set top box 141 in step 303. The request may represent any change that is available to the guest to make, e.g. a change of menu language, subtitle language, prioritized television channels etc.

The received request for change is implemented in the entertainment server in a step 304, where a technical profile associated with the set top box 141 from which the request was received is updated to reflect the requested change. Following this update, information and entertainment sent to that set top box 141 to be presented on the associated television set 140, will be presented in accordance with the updated profile.

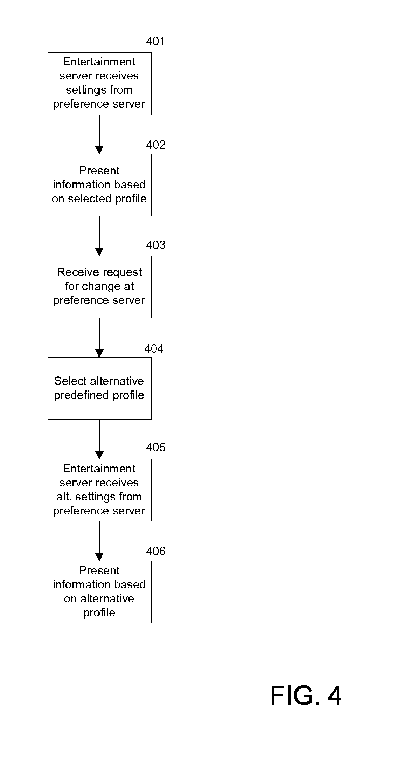

According to a second embodiment, illustrated in FIG. 4, the guest may access the preference server 112 to select a different one of the predefined preference profiles. By way of example, the guest is a German citizen with German as his first language. The profile selected based on the demographic profile received from the PMS server 102 gives him menus in German, German television channels are listed first on his in room TV 140, and non-German movies are presented with audio track dubbed in German. However, the guest may not mind menus in English and he wants to watch a movie with its original English audio track. He may then access the preference server using his remote control, the set top box 141 and his in room television 140 to select a different set of predefined preferences.

In this case the entertainment server is initialized in a step 401 when the entertainment server 122 receives the settings included in the selected predefined technical profile. Again, as described above, the settings may be received directly from the preference server 112 or indirectly from a set top box 141. The entertainment server presents information and entertainment to the guest over the set top box 141 and television set 140 in the guest's room using the received preference profile in a step 402. In a next step 403, the preference server 112 receives a request for an alternative predefined profile from a set top box 141. This request may be received over the network 181. The preference server 112 selects an alternative predefined set of settings- a different predefined profile - in a step 404, and transfers these to the entertainment server 122 in a step 405. In a following step 406, information and entertainment are presented in accordance with the alternative profile.

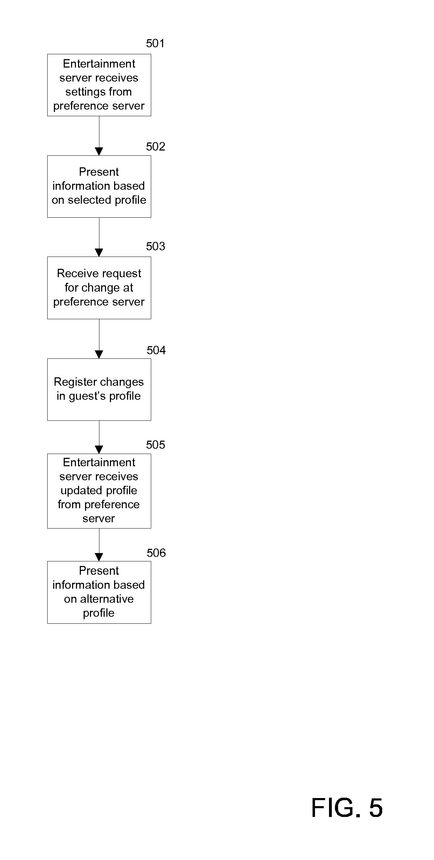

According to a third embodiment, illustrated in FIG. 5, the guest may access the preference server 112 as per the previous embodiment, but according to this embodiment the guest may make changes to individual settings in the profile. Again, the entertainment server 122 is initialized in a step 501 when the entertainment server 122 receives the settings included in the selected predefined profile. Again, as described above, the settings may be received directly from the preference server 112 or indirectly from a set top box 141. The entertainment server 122 presents information and entertainment to the guest over the set top box 141 and television set 140 in the guest's room using the received preference profile in a step 502. In a next step 503, the preference server 112 receives a request from a set top box 141 representing the guest's wish to change his or her profile.

According to this embodiment, a profile of settings associated with the guest may be maintained in the preference server 112. Initially this profile may be the predefined profile of settings selected based on the demographic profile received from the PMS server 102 when the guest checked in to the hotel. The request received in step 503 may then include a change in any setting that is part of that guest's preference profile as stored in the preference database 113. The requested changes may be registered in the guest's profile stored in the preference database 113 in a step 504, which is then transmitted to the entertainment server to be implemented in a step 505. In step 506, information and entertainment may then be presented in accordance with the updated preference profile.

Consistent with certain principles of the invention, the guest profile may be retained for future visits at the same hotel, or at other hotels in the same chain. The invention also allows for several hotels that are otherwise unrelated to use a centrally operated system of distribution of preference profiles. According to embodiments implementing these features, a replicator 111 may be part of the system. A replicator may be a software component of a preference server 112, or it may be configured to operate on individual hardware equipment connected to the server and to the Internet. According to some embodiments consistent with the principles of the invention, the replicator may be a separate dedicated application. According to other embodiments it may be an individual web server. For distributing preference profiles, the replicator may use protocols designed for this particular purpose, or standard protocols that are known in the art, such as HTTP or FTP.

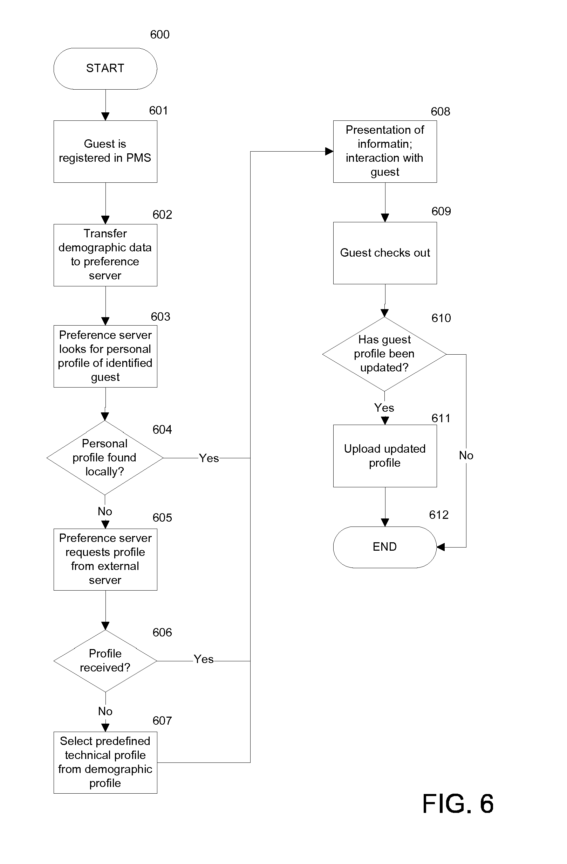

FIG. 6 illustrates a process including distribution of preference profiles, as seen from the perspective of the system at a lodging facility such as a hotel, as illustrated in FIG. 1. Additional servers may be located at additional facilities such as hotels or hotel chain head offices. Servers may also be operated by service providers providing guest preference profiles as a service to hotels.

The process starts in an initial step 600. In a first step 601, a guest is registered in a hotel PMS server 102. The relevant demographic data may then be transferred to the preference server 112 in a step 602. According to this embodiment, the received demographic data may include information that identifies the guest uniquely. The identifying information may be dependent on the guest being registered as belonging to a loyalty program, or that the guest has previously been registered with a preference profile in a system operating in accordance with the principles of the invention.

In a step 603 the preference server 112 looks for a personal preference profile associated with the identification of the guest received from the PMS server 102. A personal profile may already be stored in the local database of preference profiles 113 if, for example, the guest has already stayed at this hotel, or if a profile has been received as part of a reservation process prior to the arrival of the guest. If a profile is found 604, the process may move on to step 608 and start providing information or entertainment to the guest. If no information is found 604, the preference server may request a personal profile for the identified guest from an external server in step 605. The external server may be a server located at a different hotel, at a head office of the hotel chain, or it may be a server operated by a provider of guest preference profiles. The process of communicating with the external server may be performed by the replicator 111.

If a personal preference profile for the guest is received 606, the process may proceed to provide information and entertainment in accordance with the profile in step 608. If no profile is received 606, the process may proceed in step 607 to select a predefined profile from the predefined profiles stored in the preference database 113, based on the demographic data received from the PMS server in step 602.

When a profile of settings has been selected and transferred to the entertainment server 122, the entertainment server may proceed to present information and entertainment to the guest over the in room television set 140 and the set top box 141. The preference server 112 may receive requests from the guest for updates of that guest's preference profile, and these changes may be implemented as they occur during the guests stay. This part of the process may correspond with the steps described with reference to FIG. 5.

In a next step 609 the guest checks out from the hotel. A check may now be performed in step 610 to determine if the guest's profile has been changed since the guest checked in at the hotel. If the guest has updated his or her profile, the updated profile may be uploaded to an external server to be available the next time the guest checks in at a hotel connected to the same system for distribution of preference profiles, The process then terminates in step 612.

The upload of the updated profile illustrated in step 611 may alternatively, in accordance with some embodiments of the invention, be performed as they happen during the guest's stay at the hotel, instead of after the guest checks out.

Consistent with the principles of the invention, the user may interact with the system, including the preference server 112, the entertainment server 122, or both, using a computer instead of a remote control. The set top box 141 may be realized as an integral part of the television set 140, or as a separate device. The set top box may also be part of a personal computer or a gaming console.

The local servers providing the functionality of the PMS server 102, the preference server 112 and the entertainment server 122 have been described as separate servers and illustrated as individual computers in the drawings in the examples described above. However, it is in accordance with aspects of the invention to provide the functionality of these various servers as separate functions installed on the same computer system. The same is the case for their associated databases 103, 113, 123.

## Claims

1. A method in a computer system for providing a personalized entertainment service to a guest at a lodging facility, comprising:
receiving from a property management system, demographic data associated with at least one room in said lodging facility;
selecting among a plurality of preconfigured options for an entertainment system based at least partly on said demographic data; and
providing entertainment in accordance with said selection among said preconfigured options in a room for which associated demographic data has been received.

2. The method according to claim 1, wherein said demographic data includes at least one of a nationality and a preferred language of a guest registered in said property management system as staying in an associated room.

3. The method according to claim 1, wherein said preconfigured options include at least one of a selected language for a menu to be displayed at the screen of an in room television, a preferred language to be used for television programming subtitles or captioning, a preferred audio language, a selection of television channels available on an in room television, and a preferred sequence of presentation of television channels available on an in room television.

4. The method according to claim 1, further comprising:
determining if said received demographic data includes a unique profiles identifier;
if a unique profile identifier is provided, accessing a database and retrieving a profile identified by said profile identifier; and
basing said selection among said preconfigured options at least partly on said retrieved profile.

5. The method according to claim 4, further comprising:
receiving interactive feed back from a set top box connected to said in room television; and
updating said retrieved profile with said received interactive feed back.

6. The method according to claim 1, wherein said demographic data is representative of a guest registered in the property management system as staying at said associated room.

7. The method according to claim 1, wherein said step of providing entertainment includes transmitting said preconfigured options to an entertainment system as settings to be implemented by said system.

8. A computer system for providing a personalized entertainment service to a guest at a lodging facility, comprising:
a database storing a plurality of preconfigured options for an entertainment system associated with a demographic category;
a server connected to said database and to at least one communication network, said server being configured to:
receive, from a property management system, demographic data associated with at least one room in said lodging facility;
select among said plurality of preconfigured options for an entertainment system, said selection being based at least partly on a correspondence between said received demographic data and said demographic category; and
provide entertainment in accordance with the selected one of said preconfigured options in a room for which associated demographic data has been received.

9. The computer system of to claim 8, wherein said demographic data includes at least one of a nationality and a preferred language of a guest registered in said property management system as staying in an associated room.

10. The computer system of claim 8, wherein said preconfigured options include at least one of a selected language for a menu to be displayed at the screen of an in room television, a preferred language to be used for television programming subtitles or captioning, a preferred audio language, a selection of television channels available on an in room television, and a preferred sequence of presentation of television channels available on an in room television.

11. The computer system of claim 8, being further configured to:
determine if said received demographic data includes a unique profile identifier;
if a unique profile identifier is provided, access a database and retrieve a profile identified by said profile identifier; and
base said selection among said preconfigured options at least partly on said retrieved profile.

12. The computer system of claim 11, being further configured to:
receive interactive feed back from a set top box connected to said in room television; and
update said retrieved profile with said received interactive feed back.

13. The computer system of claim 8, wherein said demographic data is representative of a guest registered in the property management system as staying at said associated room.

14. The computer system of claim 8, wherein said server is configured to provide entertainment by transmitting said preconfigured options to an entertainment system as settings to be implemented by said system.

15. A computer program product embodied on a computer-readable storage medium, the computer program product including instructions which when executed by a computer system, are operable to cause the computer system to perform acts comprising:
receiving from a property management system, demographic data associated with at least one room in a lodging facility;
selecting among a plurality of preconfigured options for an entertainment system based at least partly on said demographic data; and
providing entertainment in accordance with said selection among preconfigured options, in a room for which associated demographic data has been received.

16. The computer program product of claim 15, wherein said demographic data includes at least one of a nationality and a preferred language of a guest registered in said property management system as staying in an associated room.

17. The computer program product of claim 15, wherein said preconfigured options include at least one of a selected language for a menu to be displayed at the screen of an in room television, a preferred language to be used for television programming subtitles or captioning, a preferred audio language, a selection of television channels available on an in room television, and a preferred sequence of presentation of television channels available on an in room television.

18. The method according to claim 15, further comprising:
determining if said received demographic data includes a unique profile identifier;
if a unique profile identifier is provided, accessing a database and retrieving a profile identified by said profile identifier; and
basing said selection among said preconfigured options at least partly on said retrieved profile.

19. The computer program product of claim 18, further comprising:
receiving interactive feed back from a set top box connected to said in room television; and
updating said retrieved profile with said received interactive feed back.

20. The computer program product of claim 15, wherein said demographic data is representative of a guest registered in the property management system as staying at said associated room.

21. The computer program product of claim 15, wherein said step of providing entertainment includes transmitting said preconfigured options to an entertainment system as settings to be implemented by said system.
